# EUROPÄISCHE PATENTSCHRIFT

(11) **EP 1 834 397 B1**
(45) Veröffentlichungstag und Bekanntmachung des Hinweises auf die Patenterteilung: **08.01.2014**
(21) Anmeldenummer: 05801666.8
(22) Anmeldetag: 03.11.2005
(51) Int. Cl.: H02K 7/14, H02K 9/06, H02K 7/00

(54) **ELEKTROHANDWERKZEUGMASCHINE**
HAND-HELD ELECTRIC MACHINE TOOL
MACHINE-OUTIL ELECTRIQUE PORTATIVE

(30) Priorität: 29.12.2004 DE 102004063751
(43) Veröffentlichungstag der Anmeldung: 19.09.2007
(73) Patentinhaber: Robert Bosch GmbH, 70442 Stuttgart (DE)
(72) Erfinder: VOIGT, Mike, 74405 Gaildorf (DE)
(86) Internationale Anmeldenummer: PCT/EP2005/055732
(87) Internationale Veröffentlichungsnummer: WO 2006/072489

(56) Entgegenhaltungen:
- EP-A- 0 192 469
- EP-A- 1 345 309
- DE-B- 1 016 153

## Beschreibung

Die vorliegende Erfindung geht aus von einer Elektrohandwerkzeugmaschine nach dem Oberbegriff des Anspruchs 1.

Durch die Patentschrift WO 86/07211 ist ein Elektromotor bekannt, dessen Rotorwelle innen hohl ist, wobei durch den Hohlraum eine Kühlflüssigkeit gepumpt wird, die an einem Ende der Hohlwelle durch radiale Eintrittsöffnungen eintritt, beim Durchströmen des Hohlraums Wärme aufnimmt, durch radiale Öffnung am anderen Ende der Hohlwelle wieder austritt und dabei Wärme abführt.

Der bekannte Elektromotor hat den Nachteil, dass die Kühlflüssigkeit mit einer besonders abgedichteten Pumpe zur Kühlstelle gefördert werden muss und nach unausweichlichem Verlust ersetzt werden muß. Der bekannte Elektromotor ist daher komplizierter aufgebaut und störanfälliger als Motoren ohne zusätzliche Kühlung.

Aus der DE 297 14 740 ist ein gekapselter Elektromotor bekannt, dessen Rotorwelle von einem Innenluftstrom gekühlt wird, wobei zusätzlich eine Flüssigkeitskühlung vorgesehen ist. Auch dieser Motor ist verhältnismäßig kompliziert aufgebaut und störanfällig.

Die DE 1016 153 A beschreibt ein Elektro-Handschleifgerät mit Elektromotor. Durch die hohle Läuferwelle des Elektromotors wird Kühlluft geführt.

Ferner ist aus der EP 192 469 A2 eine Handwerkzeugmaschine mit Elektromotor bekannt, dessen Rotorwelle zum Durchtritt von Kühlluft hohl ausgeführt ist.

### Vorteile der Erfindung

Die Erfindung mit den Merkmalen des Anspruchs 1 hat den Vorteil, dass allein mithilfe des ohnehin zur Kühlung des Elektromotors vorgesehenen, standardgemäßen Kühlventilators zusätzliche Kühlluft durch die Hohlwelle des Motors geführt wird und den Elektro-, insbesondere Asynchronmotor, mit bisher nicht erreichtem, hohem Wirkungsgrad kühlt und dessen Lebensdauer wesentlich erhöht.

Durch die erfindungsgemäße Ausgestaltung des Elektromotors wird die Temperatur der Rotorwelle im Leerlauf um ca. 20% und unter Last um ca. 40% reduziert. Dabei steigt das Kühlpotential nach Lastphasen im Leerlauf um ca. 300%.

Der Rotor bliebe ohne die Innenkühlung nur unzureichend gekühlt, könnte seine Wärme nur an den ohnehin schon übermäßig heißen Ständer abgeben, wobei er bis zu 300°C heiß werden kann.

### Zeichnung

Nachstehend ist die Erfindung anhand einer Beschreibung mit zugehöriger Zeichnung näher erläutert.

Es zeigen
Figur 1 einen Längsschnitt eines erfindungsgemäßen Winkelschleifers Figur 2 einen weiteren Längsschnitt eines weiteren Ausführungsbeispiels des erfindungsgemäßen Winkelschleifers und
Figur 3 einen Querschnitt des Motors des Winkelschleifers gemäß Figur 1.

### Ausführungsbeispiel

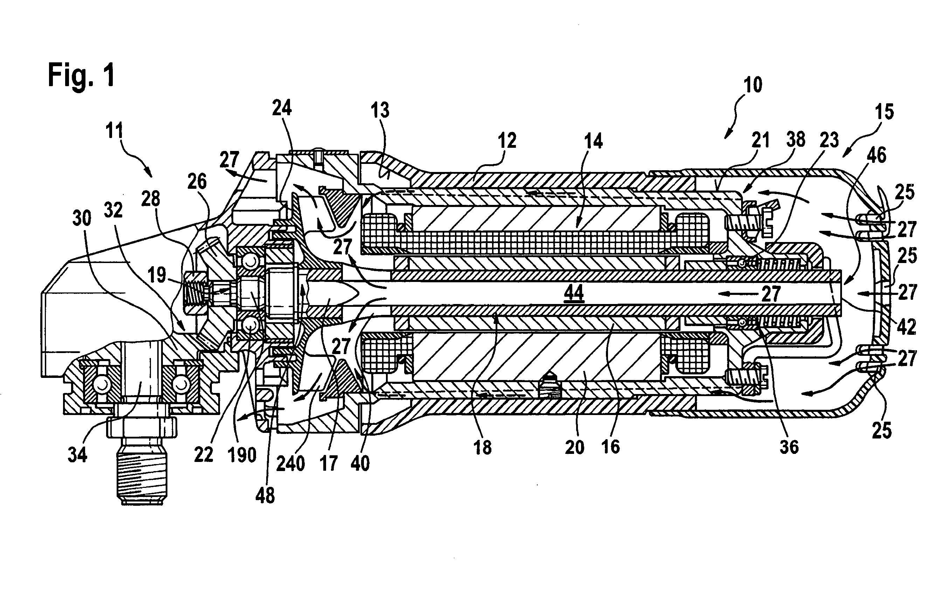

Figur 1 zeigt einen Winkelschleifer 10 mit einem Gehäuse 12 mit einem Vorderende 11 und einem Hinterende 15. Das Gehäuses 12 nimmt einen Asynchronmotor 14 auf. Dieser besteht aus einem drehbaren Rotor 16 und aus einem gehäusefesten Ständer 20. Der Ständer 20 umgreift den Rotor 16 konzentrisch, radial beabstandet durch einen engen Ringspalt. Der Rotor 16 sitzt drehfest auf einer zentralen, mittig hohlen Rotorwelle 18, die beidenends in einem vorderen und einem hinteren Wälzlager 22, 23 im Genäuse 12 drehgelagert ist. Sie trägt auf ihrem Außenumfang an ihrem in Betrachtungsrichtung linken Ende einen Kühlventilator 24. Dieser erzeugt im Innenraum des Gehäuses 12 einen Unterdruck und zieht dadurch Kühlluft entsprechend den Pfeilen 27 von außen über Luftschlitze 25 im Hinterende 15 des Gehäuses 12 nach innen durch einen Zwischenraum 38 zwischen der Außenfläche 21 des Ständers 20 und der Gehäuseinnenseite 13 hindurch. Damit wird der Asynchronmotor 14 außen gekühlt. Zusätzlich wird der Rotor 16 durch einen durch das Innere der hohlen Rotorwelle 18 ziehenden Luftstrom gekühlt. Die erwärmte Kühlluft 27 wird durch den Ventilator 24 am Vorderende des Winkelschleifers 10 durch entsprechende Öffnungen ausgeblasen.

Die Rotorwelle 18 trägt auf ihrem im vorderen Wälzlager 22 drehbar gelagerten freien Ende 19 ein Kegelritzel 26, das über eine Gewindemutter 28 daran axial und drehsicher festgelegt ist. Das Kegelritzel 26 kämmt mit einem Tellerrad 30 und bildet zusammen mit diesem ein Winkelgetriebe 32, das eine zur Rotorwelle 18 rechtwinklig angeordnete Abtriebswelle 34 drehend antreibt. Diese ist zur Drehmitnahme eines nicht näher bezeichneten Drehschleifwerkzeugs, z.B. einer Schleifscheibe, vorgesehen.

Beim Schleifvorgang gebildeter Staub und andere Partikel können mit der eingesaugten Kühlluft 27 nicht zwischen den Rotor 16 und den Stator 20 gelangen, weil sie durch eine entsprechende Kapselung 36 davon ferngehalten werden. Dadurch können aber auch nur minimale Kühlluftmengen durch den Ringspalt zwischen dem Rotor 16 und dem Ständer 20 hindurchziehen. Die Kühlung des Asynchronmotors 14 erfolgt daher im Wesentlichen durch den an der Außenfläche 21 des Ständers 20 vorbeistreichenden Luftstrom. Zur zusätzlichen Innenkühlung erfolgt der Eintritt der Kühlluft 27 in den Hohlraum 44 der Rotorwelle 18 am Hinterende 15 des Winkelschleifers 10 über deren als offenes Wellenende 46 ausgestalteten Eintrittsöffnung. Der Austritt der erwärmten Kühlluft 27 erfolgt durch radiale Öffnungen 40, in einem dickwandigeren Axialbereich der Rotorwelle 18 in Betrachtungsrichtung rechts vor dem Ventilator 24. Die Öffnungen 40 sind als Querbohrungen oder Langlöcher ausgestaltet.

Der Kühlluftstrom kommt aufgrund des Unterdrucks zwischen den Lüfterflügeln 240 des Ventilators 24 und dem dahinterliegenden Bereich der Rotorwelle 18 (Normaldruck) zustande. Die Rotorwelle 18 ist so lang, dass ihr hinteres Wellenende bzw. ihre kreisrunde Eintrittsöffnung 42 außerhalb des durch Schleifstaub und Späne gefährdeten Gehäusebereichs und so weit wie möglich vom Entstehungsort des Schleifstaubs entfernt liegt.

Die Rotorwelle 18 ist zweiteilig ausgestaltet sein und besteht aus einem vorderen Stück 190, das aus stufenwellenartigem Vollmaterial besteht. Deren hinteres Stück 48 besteht aus rundrohrartigem, magnetisch leitendem Material. Die Stücken 190, 48 sind miteinander axial verpresst. Dabei bildet der Fügebereich des hohlwellenartigen hinteren Stücks 48 ein nicht näher bezeichnetes Keilwellenprofil mit jeweils als Durchbruch ausgestalteten Keilwellenzahnlücken, die als radiale Austrittsöffnungen 40 fungieren und durch die hindurch die heiße Kühlluft 27 zum Ventilator 24 hin- und von diesem weg radial nach außen abströmen kann.

Zur Verringerung des Strömungswiderstands im Bereich der Austrittsöffnungen 40 der Rotorwelle 18 ist das vordere Stück 190 auf seiner in das hintere Stück 48 gepaßten Seite mit einem Strömungskegel 17 versehen, der die anströmende Kühlluft 27 beruhigt radial nach außen zu den Austrittsöffnungen hin leitet.

Die Wandstärke der Hohlwelle ist bei einem erprobten Ausführungsbeispiel des Asynchronmotors 14 mit mindestens 2 mm so gewählt, dass ein größtmöglicher Querschnitt für die Luftdurchführung entsteht bei noch zulässiger Biege- und Torsionssteifigkeit. Da die Rotorwelle 18 am magnetischen Fluß des Rotors 16 "beteiligt" ist, sollte ihre Wandstärke nicht kleiner als 2 mm sein.

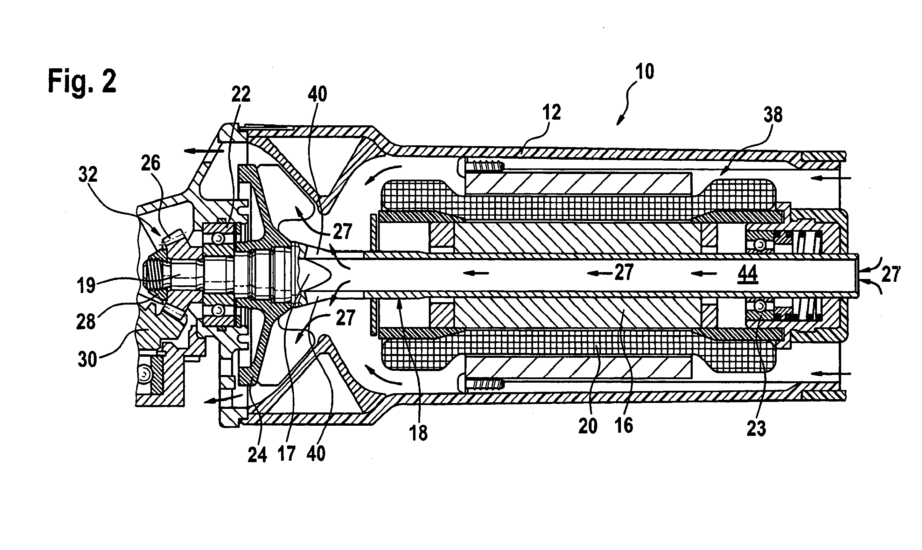

Figur 2 läßt die Ausgestaltung der radialen Austrittsöffnungen 40 der Rotorwelle 18 als Schlitze erkennen und stimmt im übrigen weitgehend mit Figur 1 überein.

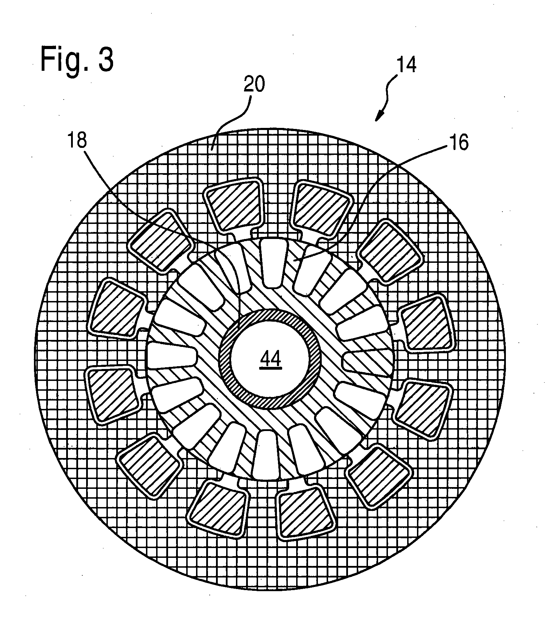

Figur 3 läßt den Querschnitt des Asynchronmotors 14 deutlich erkennen und die Ausgetaltung der Rotorwelle 18 als Hohlraum 44 bzw. Kanal.

## Patentansprüche

1. Elektrohandwerkzeugmaschine (10) mit einem aus einem Rotor (16) und einem Ständer (20) bestehenden Elektromotor (14), insbesondere gekapselter Asynchronmotor, mit Luftkühlung, wobei zur Innenkühlung des Rotors (16) eine hohle Rotorwelle (18) als Kanal (44) für Kühlluft (27) längs durch den Rotor (16) vorgesehen ist, durch den die Kühlluft (27) allein mittels eines Kühlventilators (24) hindurchgefördert wird, **dadurch gekennzeichnet, dass** die Rotorwelle (18) aus zwei Stücken gefügt ist, wobei ein axial vorderes Stück (190) in ein axial hinteres Stück (48) gesteckt ist, aus Vollmaterial besteht und mit einem Strömungskegel (17) in das Innere des hinteren Stücks (48) ragt.

2. Elektrohandwerkzeugmaschine nach Anspruch 1, **dadurch gekennzeichnet, dass** die Rotorwelle (18) am hinteren Ende als offenes Rohr ausgestaltet ist und dort eine kreisrunde Eintrittsöffnung (42) für Kühlluft (27) hat.

3. Elektrohandwerkzeugmaschine nach Anspruch 1 oder 2, **dadurch gekennzeichnet, dass** die Rotorwelle (18) mit ihrem hinteren Ende eine Kapselung des Asynchronmotors (14) durchtritt und mit ihrer Eintrittsöffnung (42) nah benachbart zum Hinterende (15) der Elektrohandwerkzeugmaschine (10) angeordnet ist.

4. Elektrohandwerkzeugmaschine nach einem der vorhergehenden Ansprüche, **dadurch gekennzeichnet, dass** die Rotorwelle (18) aus magnetisch leitendem Material besteht und ihr rohrartiger Bereich eine Wandstärke von ca. 2 mm hat.

5. Elektrohandwerkzeugmaschine nach einem der vorhergehenden Ansprüche, **dadurch gekennzeichnet, dass** das hintere Stück (48) aus rundrohrartigem, magnetisch leitendem Material besteht.

6. Elektrohandwerkzeugmaschine nach einem der vorhergehenden Ansprüche, **dadurch gekennzeichnet, dass** Staub und andere Partikel durch eine Kapselung (36) von einem Ringspalt zwischen dem Rotor (16) und dem Ständer (20) ferngehalten werden.

7. Elektrohandwerkzeugmaschine nach einem der vorhergehenden Ansprüche, **dadurch gekennzeichnet, dass** die Rotorwelle (18) im vorderen Bereich den Ventilator (24) trägt und diesem vorgeschaltete radiale Öffnungen (40) zum Absaugen der erwärmten Kühlluft (27) zum Ventilator (24) hin aufweist.

## Claims

1. Handheld electric machine tool (10) having an electric motor (14) which comprises a rotor (16) and a stator (20), in particular an encapsulated asynchronous motor, with air cooling, wherein, in order to cool the interior of the rotor (16), a hollow rotor shaft (18) is provided longitudinally through the rotor (16) as a channel (44) for cooling air (27), the cooling air (27) being conveyed through the said channel solely by means of a cooling fan (24), **characterized in that** the rotor shaft (18) is assembled by joining two pieces, wherein a piece (190) which is axially at the front is inserted into a piece (48) which is axially at the rear, the said piece which is axially at the front being composed of solid material and projecting by way of a flow cone (17) into the interior of the rear piece (48).

2. Handheld electric machine tool according to Claim 1, **characterized in that** the rotor shaft (18) is designed as an open tube at the rear end and there has a circular inlet opening (42) for cooling air (27).

3. Handheld electric machine tool according to Claim 1 or 2, **characterized in that** the rotor shaft (18) passes through an encapsulation of the asynchronous motor (14) by way of its rear end and is arranged closely adjacent to the rear end (15) of the handheld electric machine tool (10) by way of its inlet opening (42).

4. Handheld electric machine tool according to one of the preceding claims, **characterized in that** the rotor shaft (18) is composed of magnetically permeable material and its tubular region has a wall thickness of approximately 2 mm.

5. Handheld electric machine tool according to one of the preceding claims, **characterized in that** the rear piece (48) is composed of a magnetically permeable material which is in the shape of a round tube.

6. Handheld electric machine tool according to one of the preceding claims, **characterized in that** dust and other particles are kept away from an annular gap between the rotor (16) and the stator (20) by an encapsulation (36).

7. Handheld electric machine tool according to one of the preceding claims, **characterized in that** the rotor shaft (18) supports the fan (24) in the front region and, upstream of the said fan, has radial openings (40) for drawing away the heated cooling air (27) in the direction of the fan (24) by suction.

## Revendications

1. Machine-outil électrique portative (10) comprenant un moteur électrique (14) constitué d'un rotor (16) et d'un stator (20), en particulier un moteur asynchrone encapsulé, à refroidissement par air, un arbre de rotor creux (18) étant prévu longitudinalement à travers le rotor (16), en tant que canal (44) pour de l'air de refroidissement (27), en vue du refroidissement interne du rotor (16), à travers lequel canal l'air de refroidissement (27) est acheminé uniquement au moyen d'un ventilateur de refroidissement (24), **caractérisée en ce que** l'arbre de rotor (18) est assemblé à partir de deux pièces, une pièce axialement avant (190) étant insérée dans une pièce axialement arrière (48), étant constituée d'un matériau massif et faisant saillie par un cône d'écoulement (17) dans l'intérieur de la pièce arrière (48).

2. Machine-outil électrique portative selon la revendication 1, **caractérisée en ce que** l'arbre de rotor (18) est configuré à l'extrémité arrière sous forme de tube ouvert et y présente une ouverture d'entrée circulaire (42) pour de l'air de refroidissement (27).

3. Machine-outil électrique portative selon la revendication 1 ou 2, **caractérisée en ce que** l'arbre de rotor (18) traverse, par son extrémité arrière, une encapsulation du moteur asynchrone (14) et est disposé de manière à ce que son ouverture d'entrée (42) soit adjacente à l'extrémité arrière (15) de la machine-outil électrique portative (10).

4. Machine-outil électrique portative selon l'une quelconque des revendications précédentes, **caractérisée en ce que** l'arbre de rotor (18) est constitué d'un matériau magnétiquement conducteur et sa région en forme de tube a une épaisseur de paroi d'environ 2 mm.

5. Machine-outil électrique portative selon l'une quelconque des revendications précédentes, **caractérisée en ce que** la pièce arrière (48) est constituée d'un matériau magnétiquement conducteur en forme de tube rond.

6. Machine-outil électrique portative selon l'une quelconque des revendications précédentes, **caractérisée en ce que** la poussière et les autres particules sont maintenues, grâce à une encapsulation (36), en dehors d'un espace annulaire entre le rotor (16) et le stator (20).

7. Machine-outil électrique portative selon l'une quelconque des revendications précédentes, **caractérisée en ce que** l'arbre de rotor (18) supporte le ventilateur (24) dans la région avant et comprend des ouvertures radiales (40) situées en amont de celui-ci pour aspirer l'air de refroidissement réchauffé (27) en direction du ventilateur (24).
